# EUROPÄISCHE PATENTANMELDUNG

(11) **EP 4 682 025 A1**
(43) Veröffentlichungstag der Anmeldung: **21.01.2026**
(21) Anmeldenummer: 24188932.8
(22) Anmeldetag: 16.07.2024
(51) Int. Cl.: B62D 21/09, B62D 21/17, B62D 65/04, B62D 65/12, B62D 21/02, B62D 25/20

(54) **VERFAHREN ZUR HERSTELLUNG EINES NUTZFAHRZEUGS SOWIE NUTZFAHRZEUG**

(71) Anmelder: Schmitz Cargobull AG, 48341 Altenberge (DE)
(72) Erfinder: HOFFSCHLAG, Jan Niklas, 48691 Vreden (DE); KOPPELKAMM, Daniel, 48499 Salzbergen (DE)
(74) Vertreter: Cohausz & Florack

(57) **Zusammenfassung**

Die Erfindung betrifft ein Verfahren zur Herstellung eines Nutzfahrzeugs (1), insbesondere Lastkraftwagen, Anhänger oder Sattelauflieger, umfassend ein Chassis (2) und einen von dem Chassis (2) getragenen Aufbau (4) mit einer Bodenstruktur (10), bei dem eine Vorbaugruppe (18) wenigstens aus einer Modulatoreinheit (19) zum Anbringen von Bremskomponenten und einem Kabelbaum (20) zum elektrischen Anschließen der Bremskomponenten zu einer Vorbaugruppe (18) zusammengesetzt wird, bei dem die Vorbaugruppe (18) anschließend als separate Einheit über Vorbauverbindungen mit der Unterseite der Bodenstruktur (10) oder mit dem Chassis (2) verbunden wird und bei dem nach dem Verbinden der Vorbaugruppe (18) mit der Bodenstruktur (10) oder dem Chassis (2) das Chassis (2) mit der Bodenstruktur (10) über Chassis-Verbindungen verbunden wird. Auf diese Weise kann die Herstellung einfacher und kostengünstiger erfolgen.

## Beschreibung

Die Erfindung betrifft ein Verfahren zur Herstellung eines Nutzfahrzeugs, insbesondere Lastkraftwagen, Anhänger oder Sattelauflieger, umfassend ein Chassis und einen von dem Chassis getragenen Aufbau mit einer Bodenstruktur. Ferner betrifft die Erfindung ein Nutzfahrzeug, insbesondere Lastkraftwagen, Anhänger oder Sattelauflieger, umfassend ein Chassis und einen von dem Chassis getragenen Aufbau mit einer Bodenstruktur hergestellt mit einem solchen Verfahren.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand meist Flügeltüren aufweist, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage auf, die typischerweise aus einem, insbesondere geschäumten, Kunststoff gebildet wird. Dabei können die innere und/oder die äußere Decklage selbst bedarfsweise mehrlagig aufgebaut sein. Insbesondere geschäumte Kernlagen oder Kernlagen mit einem hohen Luftanteil können für ein hohes Maß an thermischer Isolation des Laderaums sorgen. Entsprechende Nutzfahrzeugaufbauten werden daher zweckmäßig für Kühltransporte eingesetzt. Um den Laderaum zu kühlen, weisen diese Nutzfahrzeuge typischerweise Transportkältemaschinen auf, die an der Stirnwand des Nutzfahrzeugaufbaus montiert sind, Luft aus dem Laderaum ansaugen, die angesaugte Luft kühlen und die gekühlte Luft anschließend wieder in den Laderaum zurückblasen.

Darüber hinaus sind Kofferaufbauten mit einschaligen Paneelen bekannt, die einen umlaufenden Rahmen oder eine von dem Paneel verschlossene Gitterstruktur aus vertikalen und horizontalen Profilen aufweisen. Das Paneel wird dabei meist aus einem oder aus mehreren Paneelelementen gebildet, die wenigstens im Wesentlichen aus einem glasfaserverstärkten Kunststoff, Stahl oder Aluminium gebildet sind, sowie bedarfsweise lackiert sind. Um beispielsweise das Dach abzustützen, können die Paneele mit einer Mehrzahl von zur Aussteifung des Paneels vorgesehenen, wenigstens im Wesentlichen quer zur Längsrichtung des Paneels ausgerichteten und in Längsrichtung des Paneels zwischen den Rändern des Paneels angeordneten Pfeilerelementen vorgesehen sein. Aufgrund der einschaligen Bauweise der Nutzfahrzeugaufbauten werden diese für den sogenannten Trockentransport, aber nur in Ausnahmefällen für den Kühltransport eingesetzt. Nutzfahrzeuge mit entsprechenden Kofferaufbauten, werden auch als Trockenfrachter bezeichnet.

Die zuvor beschriebenen Aufbauten weisen einen Ladeboden auf, der den Laderaum nach unten abschließt und zum Aufstellen von zu transportierender Ladung vorgesehen ist. Der Ladeboden wird dabei von einer Bodenstruktur bereitgestellt, welche die erforderliche Steifigkeit bereitstellt. Zudem kann die Bodenstruktur abschnittsweise einen geschäumten Kunststoff aufweisen, welcher der thermischen Isolation des Laderaums dient. Zur Aussteifung weisen die Bodenstrukturen der genannten Aufbauten vorzugsweise wenigstens Querträger auf, die voneinander beabstandet in der Längsrichtung der Bodenstruktur verteilt angeordnet sind. Zudem können noch Längsträger vorgesehen sein, welche die Querträger untereinander verbinden.

Die Aufbauten der Nutzfahrzeuge werden von Chassis getragen, die ihrerseits mit einem Fahrwerk verbunden sind. Das Chassis weist dabei typischerweise zwei voneinander beabstandete Längsträger auf, welche über ebenfalls voneinander beabstandete Querträger verbunden sind. Das Fahrwerk weist meist mehrere Achsen auf, die mit einer Bremsanlage und einer Federung verbunden sind. Zudem kann noch wenigstens ein sogenannter Achslift vorgesehen sein, über den die zugehörige Achse des Fahrwerks angehoben werden kann. Im entladenen Zustand kann so der Rollwiderstand gesenkt und der Wendekreis des Nutzfahrzeugs reduziert werden. Bei der Bremsanlage handelt es sich meist um eine sogenannte Druckluftbremsanlage, bei der die Bremsen pneumatisch betätigt werden. Die Federung der Achsen kann als Luftfederung ausgebildet sein, bei der die Achsen über Federbälge mit dem Chassis verbunden sind.

Für den Betrieb der Bremsanlagen, der Luftfederung und eines Achslifts sind Ventile, eine Steuerung und eine Verkabelung der Steuereinrichtung mit den Ventilen erforderlich, wobei die Verkabelung als sogenannter Kabelbaum ausgebildet ist, der typischerweise mit einer Bedienkonsole verbunden ist, über die der Fahrer manuell die Steuerungseinrichtung bedienen kann. Aufgrund der Komplexität der Verkabelung der verschiedenen Baugruppen des Nutzfahrzeugs ist dessen Herstellung recht zeitaufwändig und kostenintensiv. Zur Vereinfachung der Installation wird eine sogenannte Modulatoreinheit (19) verwendet, welche einzelne Baugruppen wie eine Steuereinrichtung und Ventile trägt, die an den Kabelbaum angeschlossen sind. Dieses Vorgehen ist jedoch noch nicht zufriedenstellend.

Daher liegt der vorliegenden Erfindung die Aufgabe zugrunde, das Verfahren und das Nutzfahrzeug jeweils der eingangs genannten und zuvor näher erläuterten Art derart auszugestalten und weiterzubilden, dass die Herstellung einfacher und kostengünstiger erfolgen kann.

Diese Aufgabe ist gemäß Anspruch 1 gelöst durch ein Verfahren zur Herstellung eines Nutzfahrzeugs, insbesondere Lastkraftwagen, Anhänger oder Sattelauflieger, umfassend ein Chassis und einen von dem Chassis getragenen Aufbau mit einer Bodenstruktur,
- bei dem eine Vorbaugruppe wenigstens aus einer Modulatoreinheit zum Anbringen von Bremskomponenten und einem Kabelbaum zum elektrischen Anschließen der Bremskomponenten zu einer Vorbaugruppe zusammengesetzt wird,
- bei dem die Vorbaugruppe anschließend als separate Einheit über Vorbauverbindungen mit der Unterseite der Bodenstruktur oder mit dem Chassis verbunden wird und
- bei dem nach dem Verbinden der Vorbaugruppe mit der Bodenstruktur oder dem Chassis das Chassis mit der Bodenstruktur über Chassis-Verbindungen verbunden wird.

Die genannte Aufgabe wird ferner bei einem Nutzfahrzeug nach dem Oberbegriff von Anspruch 8 dadurch gelöst, dass unter der Bodenstruktur eine Vorbaugruppe wenigstens umfassend eine Modulatoreinheit zum Anbringen von Bremskomponenten und einen Kabelbaum zum elektrischen Anschließen der Bremskomponenten vor dem Verbinden der Bodenstruktur mit dem Chassis über Chassis-Verbindungen als separate Einheit über Vorbauverbindungen mit der Unterseite der Bodenstruktur oder mit dem Chassis verbunden ist.

Verfahrensmäßig ist vorgesehen, zunächst eine Vorbaugruppe zu bilden, die dann als eine gemeinsame und separate Einheit mit der Bodenstruktur oder dem Chassis verbunden wird, bevor das Chassis an der Bodenstruktur festgelegt wird. Die Vorbaugruppe setzt sich dabei wenigstens aus einer Modulatoreinheit zum Anbringen von Bremskomponenten und einem Kabelbaum zum elektrischen Anschließen der Bremskomponenten zusammen. Bei den Bremskomponenten handelt es sich beispielsweise um eine Steuereinrichtung und Ventile zum Betreiben der Druckluftbremsanlage, die elektrisch mit dem Kabelbaum verbunden sind. Während die Vorbaugruppe zunächst über Vorbauverbindungen mit der Unterseite der Bodenstruktur oder mit dem Chassis verbunden wird, werden das Chassis und die Bodenstruktur erst anschließend über separate Chassis-Verbindungen miteinander verbunden.

Das Fertigen der Vorbaugruppe führt zwar zu einem separaten Aufwand und zudem bedarfsweise auch zu ergänzenden Lagerhaltungskosten. Dennoch wird der Fertigungsaufwand des Nutzfahrzeugs insgesamt verringert, da die Fertigung der Vorbaugruppe einfacher und schneller erfolgen kann als das Verbauen der entsprechenden Baugruppen nacheinander an der Bodenstruktur oder dem Chassis. Verfahrensmäßig erfolgt nach dem Verbinden des Chassis mit der Bodenstruktur bedarfsweise nur noch ein Anschließen weiterer Elemente der Bremsanlage, des Achslifts und/oder der Luftfederung, und zwar insbesondere pneumatisch. Die elektrisch zu verbindenden Baugruppen können bereits an der Modulatoreinheit vorgesehen sein. Aber auch diese können erst anschließend an der Modulatoreinheit festgelegt werden.

Auf die beschriebene Weise kann daher ein Nutzfahrzeug geschaffen werden, bei dem unter der Bodenstruktur eine Vorbaugruppe wenigstens umfassend eine Modulatoreinheit zum Anbringen von Bremskomponenten und einen Kabelbaum zum elektrischen Anschließen der Bremskomponenten vorgesehen ist. Die Vorbaugruppe ist bereits vor dem Verbinden der Bodenstruktur mit dem Chassis über Chassis-Verbindungen als separate Einheit über Vorbauverbindungen mit der Unterseite der Bodenstruktur oder mit dem Chassis verbunden. Das Nutzfahrzeug ist so einfach, schnell und kostengünstig zu fertigen.

Nachfolgend werden das Verfahren und das Nutzfahrzeug gemeinsam näher erläutert, ohne jeweils im Einzelnen zwischen dem Verfahren und dem Nutzfahrzeug zu unterscheiden. Für den Fachmann ergibt sich jedoch aus dem Kontext, welche Merkmale jeweils hinsichtlich des Verfahrens und hinsichtlich des Nutzfahrzeugs besonders bevorzugt sind.

Bei einer ersten besonders bevorzugten Ausgestaltung des Verfahrens werden vor dem Verbinden der Vorbaugruppe mit dem Chassis oder der Bodenstruktur die Modulatoreinheit und der Kabelbaum an einer Rahmenstruktur der Vorbaugruppe festgelegt. Die Vorbaugruppe lässt sich dann infolge des Rahmens besonders einfach und schnell mit dem Boden oder mit dem Chassis verbinden. Es kommt dabei insbesondere nicht zu einem Verwinden der Vorbaugruppe, was das Montieren derselben an dem Boden oder dem Chassis beeinträchtigen kann. Auch Beschädigungen an der Vorbaugruppe vor dem Montieren werden vermieden, da die Rahmenstruktur zu einem Aussteifen der Vorbaugruppe beiträgt. Aus den zuvor genannten Gründen und der konstruktiven Einfachheit halber kann die Rahmenstruktur zwei über Längsträger verbundene Querträger aufweisen. Dann kann ein hohes Maß an Steifigkeit erreicht und ein einfaches Montieren ermöglicht werden.

Alternativ oder zusätzlich kann die Vorbaugruppe mit separaten Konsolen des Chassis verbunden sein. Dies vereinfacht ein Verbinden der Vorbaugruppe mit dem Chassis, insbesondere mit den Längsträgern des Chassis an den gewünschten Stellen. Zudem können so gleichartige Vorbaugruppen an unterschiedlichen Chassis verbaut werden, ohne auf die besonderen Strukturen der jeweiligen Chassis Rücksicht nehmen zu müssen. Wenn die Vorbaugruppe zunächst an der Bodenstruktur festgelegt wird, bietet es sich an, wenn die Vorbaugruppe mit Querträgern der Bodenstruktur verbunden wird. Dann ist die Vorbaugruppe einfach an der Bodenstruktur anzubringen, wo sie zudem sicher und dauerhaft gehalten wird.

Die Herstellung des Nutzfahrzeugs kann weiter vereinfacht werden, indem wenigstens ein Bremsventil, wenigstens eine Steuereinrichtung, insbesondere Bremssteuerung, wenigstens eine Telematikeinheit und/oder wenigstens ein Luftkessel zur Vorbaugruppe ergänzt wird, bevor die Vorbaugruppe mit dem Chassis oder der Bodenstruktur verbunden wird. Dabei kann es sich der einfachen Montage halber anbieten, wenn das wenigstens eine Bremsventil, die wenigstens eine Steuereinrichtung und/oder die wenigstens eine Telematikeinheit an der Modulatoreinheit festgelegt wird. So kann ein kompaktes, hoch funktionales Bauteil erzeugt werden. Alternativ oder zusätzlich kann der wenigstens eine Luftkessel an der Rahmenstruktur, insbesondere an den Längsträgern der Rahmenstruktur, festgelegt werden. Der wenigstens eine Luftkessel wird so zuverlässig von der Vorbaugruppe gehalten.

Um Komponenten, insbesondere Bremskomponenten, steuern zu können, kann am Nutzfahrzeug eine Bedienkonsole vorgesehen sein. Diese lässt sich einfach mit dem Kabelbaum der Vorbaugruppe verbinden, wenn ein Teil des Kabelbaums durch eine Aussparung im Chassis, vorzugsweise durch eine Aussparung in einem Längsträger des Chassis und/oder zwischen dem Chassis und der Bodenstruktur nach außen geführt wird. Die Aussparung ist dabei vorzugsweise als nach oben in Richtung der Bodenstruktur offener Kanal ausgebildet. Der Kabelbaum muss dann nicht aufwendig unter dem Längsträger herumgeführt werden, wo der Kabelbaum leicht beschädigt werden kann. Vorzugsweise kann der Kabelbaum eine Bedienkonsole umfassen und die Bedienkonsole zusammen mit dem entsprechenden Teil des Kabelbaums nach außen geführt werden.

Die Vorbaugruppe lässt sich einfach, zuverlässig und kostengünstig fügen, wenn die Modulatoreinheit, der Kabelbaum, die Rahmenstruktur, die beiden Längsträger der Rahmenstruktur, das wenigstens eine Bremsventil, die wenigstens eine Steuereinrichtung, die wenigstens eine Telematikeinheit und/oder der wenigstens eine Luftkessel durch Verschrauben miteinander verbunden sind. Alternativ oder zusätzlich kommt aber auch ein Verbolzen ebenso wie ein Nieten in Frage.

Nach dem Verbinden des Chassis mit der Bodenstruktur kann einfach und schnell wenigstens ein Achslift, wenigstens ein Faltenbalg und/oder wenigstens eine Bremse des Fahrwerks mit der Vorbaugruppe verbunden werden. Mithin lassen sich alle Funktionskomponenten fertigstellen, wenn zuvor die Vorbaugruppe montiert worden ist.

Bei einer ersten besonders bevorzugten Ausgestaltung des Nutzfahrzeugs umfasst die Vorbaugruppe eine Rahmenstruktur mit wenigstens zwei Längsträgern. Entsprechende Vorbaugruppen sind damit sehr steif und dauerhaft. Alternativ oder zusätzlich umfasst die Vorbaugruppe wenigstens ein Bremsventil, wenigstens eine Bremssteuerung, wenigstens eine Telematikeinheit und/oder wenigstens einen Luftkessel. Auf diese Weise kann ein entsprechendes Nutzfahrzeug einfach, schnell und kostengünstig gefertigt werden.

Wenn das wenigstens eine Bremsventil, die wenigstens eine Steuereinrichtung, insbesondere Bremssteuerung, und/oder die wenigstens eine Telematikeinheit an der Modulatoreinheit festgelegt ist, kann dies den Zusammenbau der Vorbaugruppe vereinefachen. Auch können diese Komponenten dann einfach untereinander verbunden werden. Alternativ oder zusätzlich kann der wenigstens eine Luftkessel an der Rahmenstruktur, insbesondere den Längsträgern der Rahmenstruktur, festgelegt sein. Der wenigstens eine Luftkessel ist dann zuverlässig und dauerhaft montiert.

Sind die Baugruppen der Vorbaugruppe untereinander durch Schrauben, Bolzen und/oder Nieten miteinander verbunden, ist die Vorbaugruppe sehr schnell, einfach und kostengünstig zu konfektionieren.

Um die Montage gleichartiger Vorbaugruppen an unterschiedlichen Arten von Nutzfahrzeugen zu vereinfachen, kann die Vorbaugruppe mit separaten Konsolen des Chassis verbunden sein. Diese Konsolen können dann im Wesentlichen unabhängig von der sonstigen Ausgestaltung des Chassis vorgesehen sein, insbesondere an den Längsträgern des Chassis. Die Vorbaugruppe kann aber auch an Querträgern der Bodenstruktur verbunden sein, um die Vorbaugruppe einfach und zuverlässig in einer Weise zu montieren, die eine dauerhafte und verlässliche Montage bereitstellt.

Wenn ein Teil des Kabelbaums durch eine Aussparung im Chassis, vorzugsweise durch eine Aussparung in einem Längsträger des Chassis und/oder zwischen dem Chassis und der Bodenstruktur nach außen geführt ist, kann der Kabelbau einfach mit der Bedienkonsole verbunden werden, ohne dass der Kabelbaum unten um den Längsträger herumgeführt werden muss. Dies wird insbesondere durch eine Aussparung in Form eines oben in Richtung des Ladebodens offenen Kanals im Längsträger erreicht. Dabei kann es sich besonders anbieten, wenn der Kabelbaum die Bedienkonsole bereits umfasst und die Bedienkonsole folglich zusammen mit dem entsprechenden Teil des Kabelbaums nach außen geführt ist.

Unabhängig davon kann der wenigstens eine Achslift, wenigstens eine Faltenbalg und/oder die wenigstens eine Bremse des Fahrwerks nach dem Verbinden von Chassis und Bodenstruktur des Nutzfahrzeugs mit der Vorbaugruppe verbunden werden.

Nachfolgend wird die Erfindung anhand einer lediglich Ausführungsbeispiele darstellenden Zeichnung näher erläutert. In der Zeichnung zeigt
- Fig. 1: ein von einer Zugmaschine gezogenes, erfindungsgemäßes Nutzfahrzeug in einer perspektivischen Ansicht,
- Fig. 2: die Vorbaugruppe des Nutzfahrzeugs aus Fig. 1 in einer schematischen, perspektivischen Ansicht,
- Fig. 3: die mit der Bodenstruktur eines Nutzfahrzeugs verbundene Vorbaugruppe aus Fig. 2 in einer schematischen, perspektivischen Ansicht und
- Fig. 4: die mit dem Chassis eines Nutzfahrzeugs verbundene Vorbaugruppe aus Fig. 2 in einer schematischen, perspektivischen Ansicht.

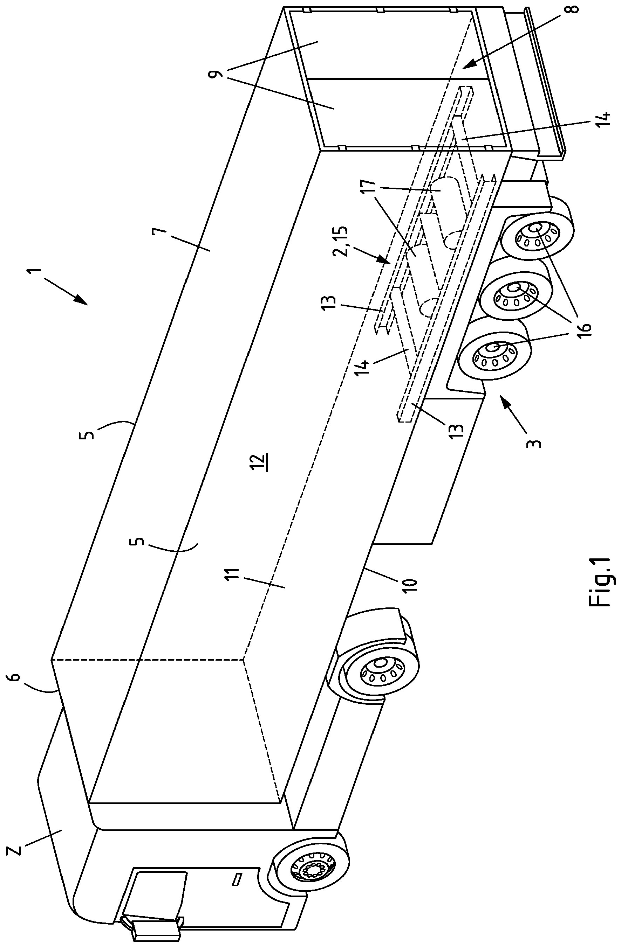

In der Fig. 1 ist ein Nutzfahrzeug 1 in Form eines Sattelaufliegers dargestellt, das von einer Zugmaschine Z gezogen wird. Das Nutzfahrzeug 1 umfasst ein Chassis 2, an dem ein Fahrwerk 3 montiert ist und das einen Aufbau 4 des Nutzfahrzeugs 1 trägt. Bei dem Aufbau 4 handelt es sich bei dem dargestellten und insoweit bevorzugten Nutzfahrzeug 1 um einen Kofferaufbau mit festen Seitenwänden 5, einer festen Stirnwand 6, einem festen Dach 7 und einer festen Rückwand 8 umfassend Rückwandtüren 9 zum Beladen des Aufbaus 4 von hinten. Die Seitenwände 5, das Dach 7 und die Stirnwand 6 sind durch Paneele gebildet, die zwei strukturgebende äußere Decklagen und eine dazwischen ausgebildete Kernlage aus einem geschäumten Kunststoff aufweisen. Die Bodenstruktur 10 des Aufbaus weist an der Oberseite einen Ladeboden 11 zum Aufstellen von Ladung im Laderaum 12 des Aufbaus 4 auf. An der Unterseite ist eine Bodenlage vorgesehen, die ein Eindringen von Feuchtigkeit in die Bodenstruktur 10 verhindert. Zwischen der Bodenlage und dem Ladeboden 11 sind über die Länge der Bodenstruktur 10 verteilt Querträger angeordnet, zwischen denen geschäumter Kunststoff vorgesehen ist. Die Querträger steifen die dargestellte und insoweit bevorzugte Bodenstruktur 10 derart aus, dass die Bodenstruktur 10 selbsttragend ist. Die Bodenstruktur 10 stützt sich zwar auf dem Chassis 2 ab, allerdings wird das Chassis 2 nicht benötigt, um die Bodenstruktur 10 zu stabilisieren. Daher ist das Chassis 2 bei dem dargestellten und insoweit bevorzugten Nutzfahrzeug 1 auch nur im hinteren Bereich des Nutzfahrzeugs 1 vorgesehen.

Das Chassis 2 umfasst Längsträger 13 und Querträger 14, die zu einer Rahmenstruktur 15 zusammengesetzt sind. An dem Chassis 2 montiert ist das Fahrwerk 3 des Nutzfahrzeugs 1 umfassend drei Achsen 16, die über eine Luftfederung umfassend Federbälge gefedert sind. Die Achsen 16 sind zudem über eine Druckluftbremse gebremst, wobei die Druckluftbremse bei dem dargestellten und insoweit bevorzugten Nutzfahrzeug 1 gebremste Bremsscheiben umfasst. Ferner weist das Fahrwerk 3 noch wenigstens einen Achslift auf, mit dem die zugehörige Achse 16 des Fahrwerks 3 angehoben werden kann, etwa wenn der Aufbau 4 entladen ist. Die Luftfederung, die Druckluftbremse und der Achslift sind grundsätzlich aus dem Stand der Technik bekannt und müssen daher hier nicht im Detail näher erläutert oder im Einzelnen dargestellt werden.

Zum Betrieb von Luftfederung, Druckluftbremse und Achslift ist Druckluft erforderlich, die von der Zugmaschine Z bereitgestellt und in Luftkesseln 17 zwischengespeichert wird. Die Druckluft wird je nach Bedarf über Pneumatikleitungen, wenigstens eine Steuerung und zugehörige Ventile zum Aktivieren der Luftfederung, der Druckluftbremse und des Achslifts eingesetzt, wie dies grundsätzlich aus dem Stand der Technik bekannt ist. Die wenigstens eine Steuerung kann dabei eine Bremssteuerung sein, die ebenfalls den Achslift und die Luftfederung steuern kann. Der Achslift und die Luftfederung können aber auch über separate Steuerungen gesteuert werden. Auch dies ist aus dem Stand der Technik grundsätzlich bekannt.

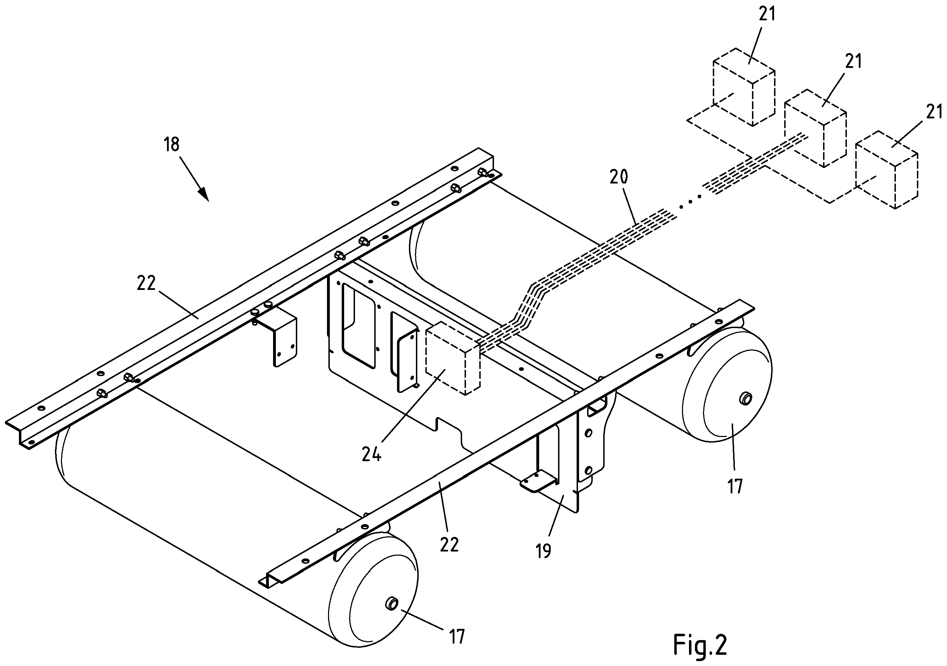

Bei der Fertigung des Nutzfahrzeugs 1 wird zunächst die in der Fig. 2 dargestellte Vorbaugruppe 18 gebildet, die wenigstens eine Modulatoreinheit 19 zum Anbringen von Bremskomponenten und einen Kabelbaum 20 zum elektrischen Anschließen der Bremskomponenten umfasst. Über den Kabelbaum 20 können die einzelnen Aktuatoren 21 der Druckluftbremse, der Luftfederung und/oder des Achslifts gesteuert werden. Die Kabel des Kabelbaums können beispielsweise auch an Messeinrichtungen, eine Telematik-Einrichtung etc. angeschlossen sein. Bei der in der Fig. 2 dargestellten Vorbaugruppe 18 sind zusätzlich noch zwei Luftkessel 17 zum Speichern von Druckluft vorgesehen. Die Vorbaugruppe 18 umfasst zudem zwei Längsträger 22, welche über die Modulatoreinheit 19 und die Luftkessell 17 miteinander verbunden sind. Auf diese Weise bildet die Vorbaugruppe 18 eine Rahmenstruktur zur Aussteifung und Montage der Vorbaugruppe 18 aus. Bei der dargestellten Vorbaugruppe 18 ist die Modulatoreinheit 19 über eine Steuereinrichtung 24 mit dem Kabelbaum 20 verbunden, wobei der Kabelbaum 20 zum Verbinden mit weiteren, rein schematisch dargestellten Komponenten, insbesondere Aktuatoren 21 vorgesehen ist. Die Kabel des Kabelbaums 20 können bedarfsweise auch oben über die Modulatoreinheit 19 hinweg zur Rückseite der Steuereinrichtung 24 geführt und dort mit der Steuereinrichtung 24 verbunden sein.

Die Modulatoreinheit 19 kann zudem mit Bremsventilen, einer Bremssteuerung und/oder einer Telematikeinheit versehen sein. Diese Komponenten können aber auch erst zu einem späteren Zeitpunkt mit der Modulatoreinheit 19 verbunden werden, etwa nach dem Verbinden des Chassis 2 an der Bodenstruktur 10. Bevor das Chassis 2 und die Bodenstruktur 10 miteinander verbunden werden, wird die Vorbaugruppe 18 entweder mit der Bodengruppe 10 oder mit dem Chassis 2 verbunden.

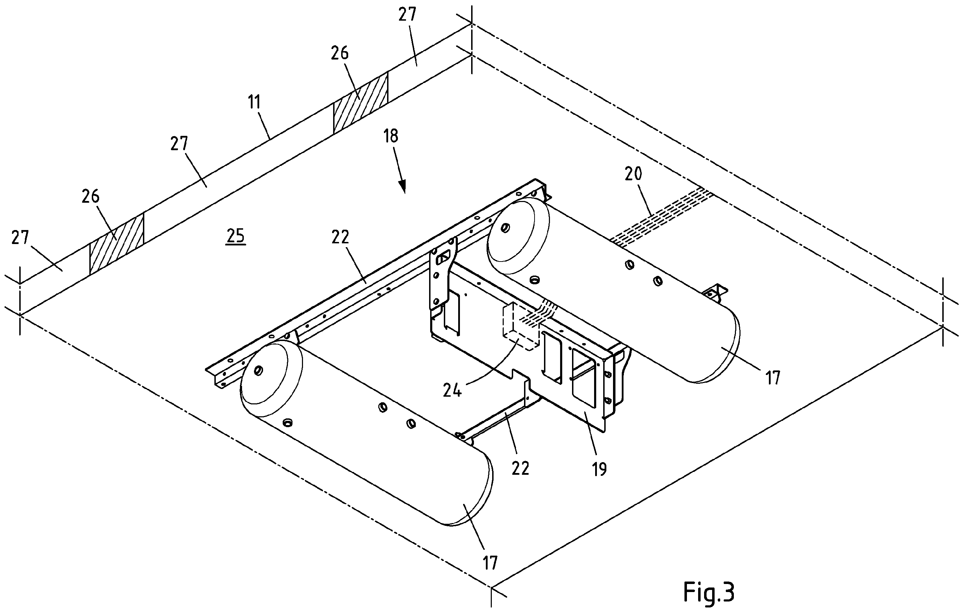

In der Fig. 3 ist die Vorbaugruppe 18 mit der Bodenstruktur 10 verbunden dargestellt. Die Bodenstruktur 10 weist an der Oberseite den Ladeboden 11 und an der Unterseite die Bodenlage 25 auf, wobei zwischen der Bodenalge 25 und dem Ladeboden 11 abwechselnd Querträger 26 und geschäumter Kunststoff 27 vorgesehen sind. Dabei ist die Vorbaugruppe 18 unter der Bodenstruktur 10 vorgesehen und durch die Bodenlage 25 mit den Querträgern 26 der Bodenstruktur 10 verschraubt. Die Verschraubung der Vorbaugruppe 18 erfolgt bei der dargestellten und insoweit bevorzugten Vorbaugruppe 18 über die Längsträger 22 der Vorbaugruppe 18. Zudem ist der Kabelbaum 20 in Richtung des Nutzfahrzeugs 1 nach vorne geführt und ebenfalls mit der Bodenstruktur 10 verbunden. Der Aufbau 4 des Nutzfahrzeugs 1 kann nun mit an der Bodengruppe 10 montierter Vorbaugruppe 18 mit dem Chassis 2 verbunden werden. Die fehlenden Komponenten der Druckluftbremse, der Luftfederung und des Achslifts können anschließend an der Modulatoreinheit 19 angebracht und elektrisch über den Kabelbaum 20 sowie pneumatisch über Druckluftleitungen mit der Vorbaugruppe 18 verbunden werden, wie dies grundsätzlich aus dem Stand der Technik bekannt ist. Es können aber auch schon weitere Komponenten der Druckluftbremse, der Luftfederung und des Achslifts an der Vorbaugruppe 18 montiert sein, bevor diese mit der Bodenstruktur 10 verbunden wird.

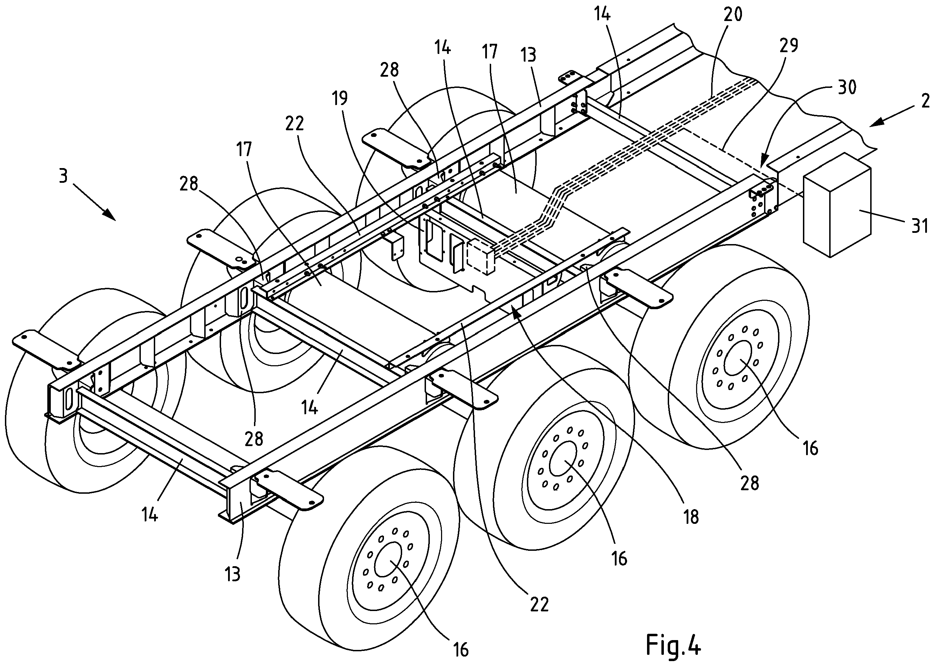

In der Fig. 4 ist die Vorbaugruppe 18 mit dem Chassis 2 verbunden dargestellt, wobei das Chassis 2 noch nicht mit der Bodenstruktur 10 des Aufbaus 4 verbunden ist. Die Vorbaugruppe 18 ist bei dem dargestellten und insoweit bevorzugten Ausführungsbeispiel über Konsolen 28 mit den Längsträgern des Chassis 2 verschraubt. Der Kabelbaum 20 ist in Richtung des Nutzfahrzeugs 1 nach vorne geführt. Wenigstens ein Kabel 29 des Kabelbaums 20 ist dabei seitlich durch eine Aussparung 30 in Form eines oben offenen Kanals im in Blickrichtung vorderen Längsträger 13 des Chassis 2 nach außen geführt und dort mit einer Bedienkonsole 31 verbunden. In einem weiteren Fertigungsschritt kann nun der Aufbau 4 über die Bodenstruktur 10 mit dem Chassis 2 verbunden werden. Die fehlenden Komponenten der Druckluftbremse, der Luftfederung und des Achslifts können anschließend an der Modulatoreinheit 19 angebracht und elektrisch über den Kabelbaum 20 sowie pneumatisch über Druckluftleitungen mit der Vorbaugruppe 18 verbunden werden, wie dies grundsätzlich aus dem Stand der Technik bekannt ist. Es können aber auch schon weitere Komponenten der Druckluftbremse, der Luftfederung und des Achslifts an der Vorbaugruppe 18 montiert sein, bevor diese mit der Bodenstruktur 10 verbunden wird. Zudem können einzelne Kabel des Kabelbaums 20 auch zur Rückseite des Chassis geführt und dort mit entsprechenden Aktuatoren, Messeinrichtungen, Telematik-Einrichtungen etc. verbunden sein.

### Bezugszeichenliste

- 1: Nutzfahrzeug
- 2: Chassis
- 3: Fahrwerk
- 4: Aufbau
- 5: Seitenwand
- 6: Stirnwand
- 7: Dach
- 8: Rückwand
- 9: Rückwandtür
- 10: Bodenstruktur
- 11: Ladeboden
- 12: Laderaum
- 13: Längsträger
- 14: Querträger
- 15: Rahmenstruktur
- 16: Achse
- 17: Luftkessel
- 18: Vorbaugruppe
- 19: Modulatoreinheit
- 20: Kabelbaum
- 21: Aktuator
- 22: Längsträger
- 24: Steuereinrichtung
- 25: Bodenlage
- 26: Querträger
- 27: Kunststoff
- 28: Konsole
- 29: Kabel
- 30: Aussparung
- 31: Bedienkonsole
- Z: Zugfahrzeug

## Patentansprüche

1. Verfahren zur Herstellung eines Nutzfahrzeugs (1), insbesondere Lastkraftwagen, Anhänger oder Sattelauflieger, umfassend ein Chassis (2) und einen von dem Chassis (2) getragenen Aufbau (4) mit einer Bodenstruktur (10),
- bei dem eine Vorbaugruppe (18) wenigstens aus einer Modulatoreinheit (19) zum Anbringen von Bremskomponenten und einem Kabelbaum (20) zum elektrischen Anschließen der Bremskomponenten zu einer Vorbaugruppe (18) zusammengesetzt wird,
- bei dem die Vorbaugruppe (18) anschließend als separate Einheit über Vorbauverbindungen mit der Unterseite der Bodenstruktur (10) oder mit dem Chassis (2) verbunden wird und
- bei dem nach dem Verbinden der Vorbaugruppe (18) mit der Bodenstruktur (10) oder dem Chassis (2) das Chassis (2) mit der Bodenstruktur (10) über Chassis-Verbindungen verbunden wird.

2. Verfahren nach Anspruch 1,
bei dem vor dem Verbinden der Vorbaugruppe (18) mit dem Chassis (2) oder der Bodenstruktur (10) die Modulatoreinheit (19) und der Kabelbaum (20) an einer Rahmenstruktur der Vorbaugruppe (18) festgelegt werden.

3. Verfahren nach Anspruch 1 oder 2,
- bei dem die Vorbaugruppe (18) mit separaten Konsolen (28) des Chassis (2) verbunden wird oder
- bei dem die Vorbaugruppe (18) mit Querträgern (14) der Bodenstruktur (10) verbunden wird.

4. Verfahren nach einem der Ansprüche 1 bis 3,
- bei dem vor dem Verbinden der Vorbaugruppe (18) mit dem Chassis (2) oder der Bodenstruktur (10) wenigstens ein Bremsventil, wenigstens eine Steuereinrichtung (24), insbesondere Bremssteuerung, wenigstens eine Telematikeinheit und/oder wenigstens ein Luftkessel (17) zur Vorbaugruppe (18) ergänzt wird und
- bei dem, vorzugsweise, das wenigstens eine Bremsventil, die wenigstens eine Steuereinrichtung (24) und/oder die wenigstens eine Telematikeinheit an der Modulatoreinheit (19) festgelegt wird und/oder der wenigstens eine Luftkessel (17) an der Rahmenstruktur, insbesondere den Längsträgern (22) der Rahmenstruktur, festgelegt wird.

5. Verfahren nach einem der Ansprüche 1 bis 4,
- bei dem ein Teil des Kabelbaums (20) durch eine Aussparung (30) im Chassis (2), vorzugsweise durch eine Aussparung (30) in einem Längsträger des Chassis (2) und/oder zwischen dem Chassis (2) und der Bodenstruktur (10) nach außen geführt wird und
- bei dem, vorzugsweise, der Kabelbaum (20) eine Bedienkonsole (31) umfasst und die Bedienkonsole (31) mit dem Teil des Kabelbaums (20) nach außen geführt wird.

6. Verfahren nach einem der Ansprüche 1 bis 5,
bei dem die Modulatoreinheit (19), der Kabelbaum (20), die Rahmenstruktur, die beiden Längsträger (22) der Rahmenstruktur, das wenigstens eine Bremsventil,
die wenigstens eine Steuereinrichtung (24), die wenigstens eine Telematikeinheit und/oder der wenigstens eine Luftkessel (17) durch Verschrauben, Verbolzen und/oder Nieten miteinander verbunden sind.

7. Verfahren nach einem der Ansprüche 1 bis 6,
bei dem nach dem Verbinden des Chassis (2) mit der Bodenstruktur (10) wenigstens ein Achslift, wenigstens ein Faltenbalg und/oder wenigstens eine Bremse des Fahrwerks (3) mit der Vorbaugruppe (18) verbunden werden.

8. Nutzfahrzeug, insbesondere Lastkraftwagen, Anhänger oder Sattelauflieger, umfassend ein Chassis (2) und einen von dem Chassis (2) getragenen Aufbau (4) mit einer Bodenstruktur (10), vorzugsweise hergestellt mit einem Verfahren nach einem der Ansprüche 1 bis 7,
**dadurch gekennzeichnet, dass** unter der Bodenstruktur (10) eine Vorbaugruppe (18) wenigstens umfassend eine Modulatoreinheit (19) zum Anbringen von Bremskomponenten und einen Kabelbaum (20) zum elektrischen Anschließen der Bremskomponenten vor dem Verbinden der Bodenstruktur (10) mit dem Chassis (2) über Chassis-Verbindungen als separate Einheit über Vorbauverbindungen mit der Unterseite der Bodenstruktur (10) oder mit dem Chassis (2) verbunden ist.

9. Nutzfahrzeug nach Anspruch 8,
**dadurch gekennzeichnet, dass** die Vorbaugruppe (18) eine Rahmenstruktur mit wenigstens zwei Längsträgern (22), wenigstens ein Bremsventil, wenigstens eine Steuereinrichtung (24), insbesondere Bremssteuerung, wenigstens eine Telematikeinheit und/oder wenigstens einen Luftkessel (17) umfasst.

10. Nutzfahrzeug nach Anspruch 8 oder 9,
**dadurch gekennzeichnet, dass** das wenigstens eine Bremsventil, die wenigstens eine Steuereinrichtung und/oder die wenigstens eine Telematikeinheit an der Modulatoreinheit (19) festgelegt ist und/oder dass der wenigstens eine Luftkessel (17) an der Rahmenstruktur, insbesondere den Längsträgern (22) der Rahmenstruktur, festgelegt ist.

11. Nutzfahrzeug nach einem der Ansprüche 8 bis 10,
**dadurch gekennzeichnet, dass** die Baugruppen der Vorbaugruppe (18) untereinander durch Schrauben, Bolzen und/oder Nieten miteinander verbunden sind.

12. Nutzfahrzeug nach einem der Ansprüche 8 bis 11,
**dadurch gekennzeichnet, dass** die Vorbaugruppe (18) mit separaten Konsolen (28) des Chassis (2) oder mit Querträgern (26) der Bodenstruktur (10) verbunden ist.

13. Nutzfahrzeug nach einem der Ansprüche 8 bis 12,
**dadurch gekennzeichnet, dass** ein Teil des Kabelbaums (20) durch eine Aussparung im Chassis (2), vorzugsweise durch eine Aussparung (30) in einem Längsträger (13) des Chassis (2) und/oder zwischen dem Chassis (2) und der Bodenstruktur (10) nach außen geführt ist und dass, vorzugsweise, der Kabelbaum (20) eine Bedienkonsole (31) umfasst und die Bedienkonsole (31) mit dem Teil des Kabelbaums (20) nach außen geführt ist.

14. Nutzfahrzeug nach einem der Ansprüche 8 bis 13,
**dadurch gekennzeichnet, dass** wenigstens ein Achslift, wenigstens ein Faltenbalg und/oder wenigstens eine Bremse des Fahrwerks mit der Vorbaugruppe (18) verbunden ist.
